# EUROPEAN PATENT APPLICATION

(11) **EP 1 788 552 A1**
(43) Date of publication of application: **23.05.2007**
(21) Application number: 06124259.0
(22) Date of filing: 16.11.2006
(51) Int. Cl.: G09G 3/36

(54) **Liquid crystal display and its driving method**

(30) Priority: 17.11.2005 KR 20050110137
(71) Applicant: SAMSUNG ELECTRONICS CO., LTD., Suwon-si Gyeonggi-do 442-742 (KR)
(72) Inventor: Kang, Ki-hyung, Paldal-gu Suwon-si Gyeonggi-do (KR)
(74) Representative: Walaski, Jan Filip

(57) **Abstract**

A liquid crystal display (LCD) and a method for driving the same are provided. The LCD includes a liquid crystal panel (100) divided into a plurality of panel regions (101,102) having data lines and gate lines arranged two-dimensionally; gate drivers (131,132) that correspond to the panel regions, are independently driven, and alternately supply gate signals to the corresponding panel regions; a data driver (121) supplying data signals to the data lines; and a backlight unit (110) radiating light to the liquid crystal panel. Accordingly, color mixing can be substantially prevented by changing the transmission mode of gate signals.

## Description

The present invention relates to a liquid crystal display (LCD) and a method of driving the LCD, particularly but not exclusively to an LCD and driving method in which colour mixing is reduced.

A related art LCD displays images by respectively supplying voltages to pixels according to input image signals to control light transmittance of the pixels, and are used in laptop computers, desktop computers, LCD televisions, and mobile telecommunication terminals. An LCD is a light receiving display device, which cannot emit light by itself but receives light from an external source to form an image. Thus, LCDs require a backlight unit, radiating light and a driving unit to drive the liquid crystal panel.

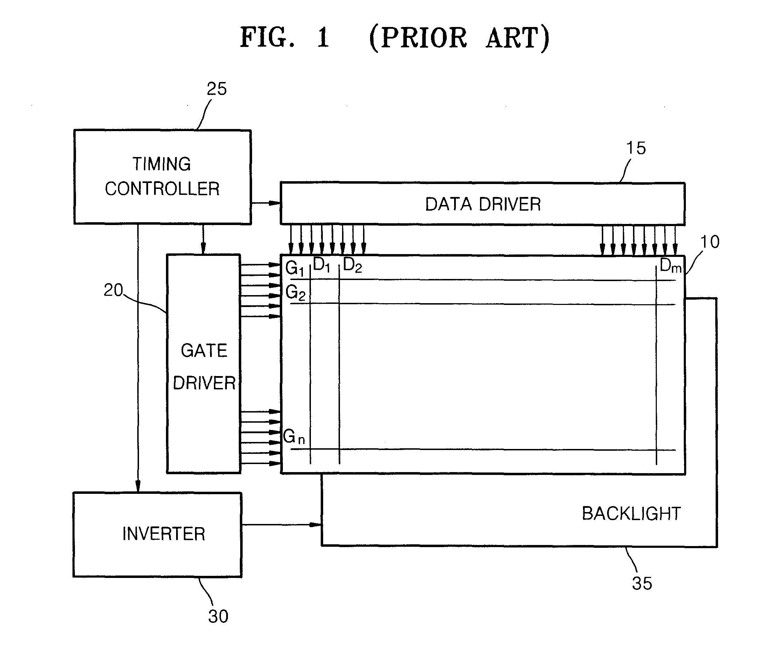

Referring to Figure 1, a related art LCD includes a liquid crystal panel 10, a backlight unit 35 supplying light to the liquid crystal panel 10, and a driving unit driving the liquid crystal panel 10. The liquid crystal panel 10 includes m x n liquid crystal pixels arranged in a matrix, in which m data lines D₁ through Dₘ and n gate lines G₁ through Gₙ intersect each other, and thin film transistors (TFT) are formed at the intersections of the data lines D₁ through Dₘ and the gate lines G₁ through Gₙ. The driving unit includes a data driver 15 supplying data signals to the data lines D₁ through Dₘ, a gate driver 20 supplying scan signals to the gate lines G₁ through Gₙ, a timing controller 25 controlling the data driver 15 and the gate driver 20 with a synchronization signal, and an inverter 30 driving the backlight unit 35.

The TFTs of the liquid crystal pixels respond to the scan signals supplied by the gate lines G₁ through Gₙ and are switched according to the data signals supplied by the data lines D₁ through Dₘ.

The timing controller 25 generates control signals to control the gate driver 20 and the data driver 15 using vertical/horizontal synchronization signals. The data driver 15 responds to the control signals of the timing controller 25 to convert digital image signals into analog data signals and supplies the analog data signals to the data lines D₁ through Dₘ. The gate driver 20 responds to the control signals of the timing controller 25 and sequentially supplies scan pulses to the gate lines G₁ through Gₙ to select a horizontal line of the liquid crystal panel to which the data signals are supplied. The inverter 30 supplies a backlight unit driving voltage to the backlight unit 35, which emits a light beam corresponding to the backlight unit driving voltage to the liquid crystal panel 10.

Related art LCDs can be TFT-LCDs using TFTs as switching devices. Color can be realized in a space-dividing mode in which one of red light (R), green light (G), and blue light (B) is displayed in each pixel to form a color image, or in a time-dividing mode in which all of the pixels display R, G and B in a temporal sequence. In the time-dividing mode, the LCD includes light sources for R, G, and B respectively, and the light sources emit light sequentially. More specifically, all of the pixels are scanned according to the operation of the gate driver and the data driver and then the red light source is turned on. Then, after the red light source is turned off, all of the pixels are scanned again and the green light source is turned on. Finally, after the green light source is turned off, all of the pixels are scanned and the blue light source is turned on. In the space-dividing mode, R, G and B color filters are mounted in regions corresponding to the pixel electrodes to display color. Accordingly, the lighting time of each color light sources is shorter in the time-dividing mode than in the space-dividing mode for a given frame frequency.

To display a moving image, the responding speed and the operating speed of the liquid crystals of an LCD must be equal to or greater than the frame frequency of the moving image. Also, the frame frequency may be increased to realize a higher resolution mobile image with greater precision. When the reaction speed and the operating speed of the liquid crystals are low, the time allotted for the liquid crystals to be arranged in the LCD is insufficient, and thus the image is crushed or diffused. Since it is difficult to improve the responding speed and the operating speed of the liquid crystals, it is also difficult to increase the frame frequency.

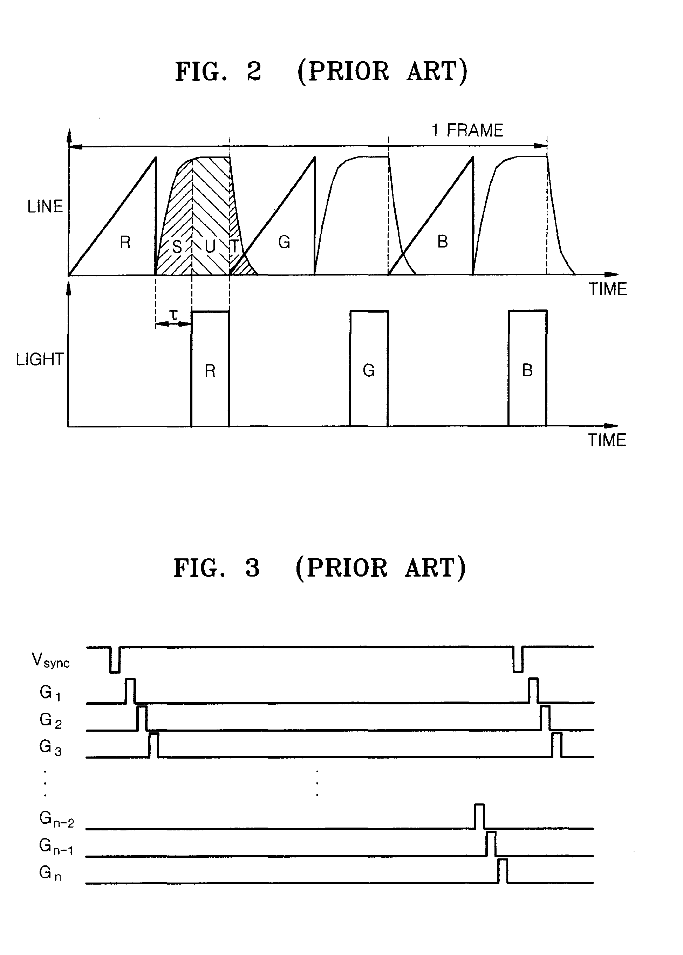

Figure 2 is a timing diagram of a related art process in which data is supplied from a data driver and liquid crystals are arranged according to the data, marked for lines of a liquid crystal panel with respect to time and how a color beam corresponding to the data is supplied after the liquid crystals are arranged.

The time required to turn on the liquid crystals according to data signals is referred to as a rising time τ, a rising section is S, and a section in which the liquid crystals stay on is U. The time required to turn all of the liquid crystals off is referred to as a falling time. A falling section is T. The backlight unit supplies light in the section U in which the liquid crystals are on. This process is repeated sequentially for R, G, and B.

Figure 3 is a timing diagram of scan pulses supplied sequentially to first through n^{th} gate lines G₁ through Gₙ according to a related art synchronization signal V_{sync}. When scanning is completed by supplying all the scan pulses, the backlight unit corresponding to the gate lines is turned on and supply light to the liquid crystal panel.

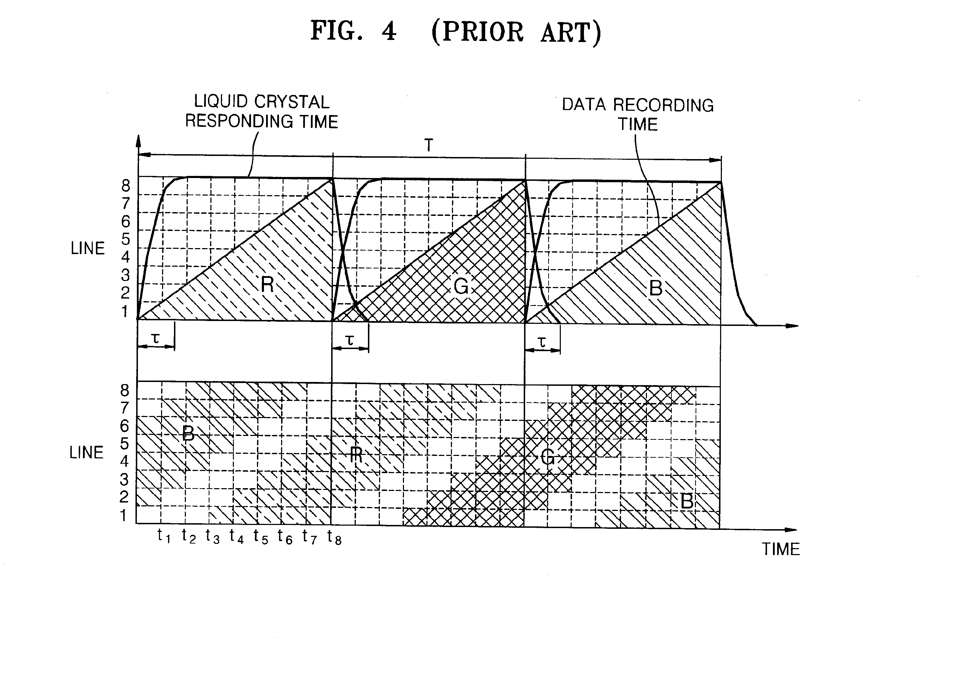

Figure 4 is a timing diagram illustrates the data recording time for R, G, and B and the corresponding backlight unit driving time in a related art liquid crystal panel including backlight unit formed of eight line blocks. A red data signal is sequentially supplied to a first line through a last line of the liquid crystal panel and scanning is performed according to data signals transmitted through each of the gate lines. At t=t₃, a red beam is radiated from a first line block of the backlight unit in response to the red data signal and pulse scanning, and at t=t₄, a red beam is radiated from a second line block of the backlight unit. In the same manner, the red beam is radiated sequentially from the third through eighth line blocks. Then a green data signal is supplied, and a green beam is radiated sequentially from the first through eighth line blocks. Next, a blue data signal is supplied, and a blue beam is radiated sequentially from the first through eighth line blocks. In addition, from t=t₃ to t=t₇, the blue beam and the red beam are both radiated to the liquid crystal panel at substantially the same time. There are also periods when the red beam and the green beam or the green beam and the blue beam are radiated to the liquid crystal panel at substantially the same time.

As described above with respect to the related art, data color displayed in some portions of a screen may be different from the colors of light sources turned on in other portions of a screen, and ideally, interference should not occur. However, since light is radiated in every direction to obtain uniformity, neighboring color beams affect liquid crystals meant to be displaying other colors and thus cause color mixing, thereby deteriorating color characteristics.

The present invention provides an LCD and a method of driving the LCD in which color mixing is prevented by alternately supplying data signals to separate panel regions.

According to an aspect of the present invention, there is provided an LCD comprising: a liquid crystal panel divided into a plurality of panel regions having data lines and gate lines arranged two-dimensionally; gate drivers that correspond to the panel regions, are independently driven, and alternately supply gate signals to the corresponding panel regions; a data driver supplying data signals to the data lines; and a backlight unit radiating light to the liquid crystal panel.

The panel regions may be symmetric about the horizontal center of the liquid crystal panel.

The gate drivers respectively may adopt a shift register mode.

The panel regions may comprise a first panel region and a second panel region separated in a vertical direction along the data lines of the liquid crystal panel and the gate drivers may comprise a first gate driver and a second gate driver.

The first gate driver sequentially may supply the gate signals to lower gate lines through upper gate lines of the first panel region and the second gate driver may sequentially supply gate signals to lower gate lines through upper gate lines of the second panel region.

The first gate driver sequentially may supply gate signals to upper gate lines through the lower gate lines of the first panel region and the second gate driver may sequentially supply gate signals to lower gate lines through upper gate lines of the second panel region.

The LCD further may comprise: an inverter driving the backlight unit; and a timing controller controlling the data driver using a horizontal synchronization signal, the gate drivers using a vertical synchronization signal, and the inverter.

According to another aspect, there is provided an LCD comprising: a liquid crystal panel divided into a plurality of panel regions having data lines and gate lines arranged two-dimensionally; a gate driver alternately supplying gate signals to the panel regions; a data driver supplying data signals to data lines; and a backlight unit radiating light to the liquid crystal panel.

The gate driver may adopt a decoding mode.

According to another aspect of the present invention, there is provided a method of driving an LCD comprising: dividing a liquid crystal panel into a plurality of panel regions having data lines and gate lines; driving the panel regions alternately; and radiating light from light sources of a backlight unit corresponding to the lines for which scanning is completed.

The driving the panel regions may comprise: supplying data signals to the data lines with a data driver; supplying alternately scan signals to the gate lines of the respective panel regions using a gate driver; and controlling the data driver with a horizontal synchronization signal and controlling the gate drivers with a vertical synchronization signal.

The panel regions may comprise a first panel region and a second panel region separated in a vertical direction along the data lines of the liquid crystal panel and the gate drivers may comprise a first gate driver and a second gate driver, and the supplying of the scan signals to the gate lines may comprise: sequentially supplying gate signals to lower gate lines through upper gate lines of the first panel region with the first gate driver; and sequentially supplying gate signals to upper gate lines through lower gate lines of the second panel region with the second gate driver.

The panel regions may comprise a first panel region and a second panel region separated in a vertical direction along the data lines of the liquid crystal panel and the gate drivers may comprise a first gate driver and a second gate driver, and the supplying of the scan signals to the gate lines may comprise: sequentially supplying gate signals to upper gate lines through lower gate lines of the first panel region with the first gate driver; and sequentially supplying gate signals to lower gate lines through upper gate lines of the second panel region with the second gate driver.

The driving the panel regions may comprise: supplying data signals to the data lines with a data driver; supplying scan signals to the gate lines of the respective panel regions with respective gate drivers corresponding to the panel regions; and controlling the data driver with a horizontal synchronization signal and controlling the gate drivers with a vertical synchronization signal.

The method of driving the LCD, may further comprise: dividing the liquid crystal panel into a first panel region and a second panel region along a direction perpendicular to the data lines; and alternately supplying gate signals to the first and second panel regions, while sequentially supplying the gates signals to upper gate lines through the lower gate lines of the first panel region and to upper gate lines through lower gate lines of the second panel region.

Embodiments of the present invention will now be described by way of example only, with reference to the attached drawings in which:
Figure 1 is a schematic view of a related art LCD;
Figure 2 is a timing diagram illustrating the driving scheme of the related art LCD of Figure 1;
Figure 3 is a timing diagram of scan pulses supplied to gate lines of the related art LCD of Figure 1 according to a synchronization signal;
Figure 4 is a timing diagram illustrating data transmission time, liquid crystal reaction time, and light radiation time of gate lines in the related art LCD of Figure 1;
Figure 5 illustrates an LCD according to an embodiment of the present invention;
Figure 6 is a timing diagram of scan pulses supplied to gate lines of the LCD of Figure 5 according to a horizontal synchronization signal of the embodiment;
Figure 7 illustrates the LCD of the embodiment of Figure 5 having eight gate lines;
Figure 8 is a timing diagram illustrating data transmission time, liquid crystal reaction time, and light radiation time of gate lines in the LCD of the embodiment of Figure 5;
Figure 9 illustrates an LCD according to another embodiment of the present invention; and
Figure 10 is a flowchart illustrating the operation of an LCD according to an embodiment of the present invention.

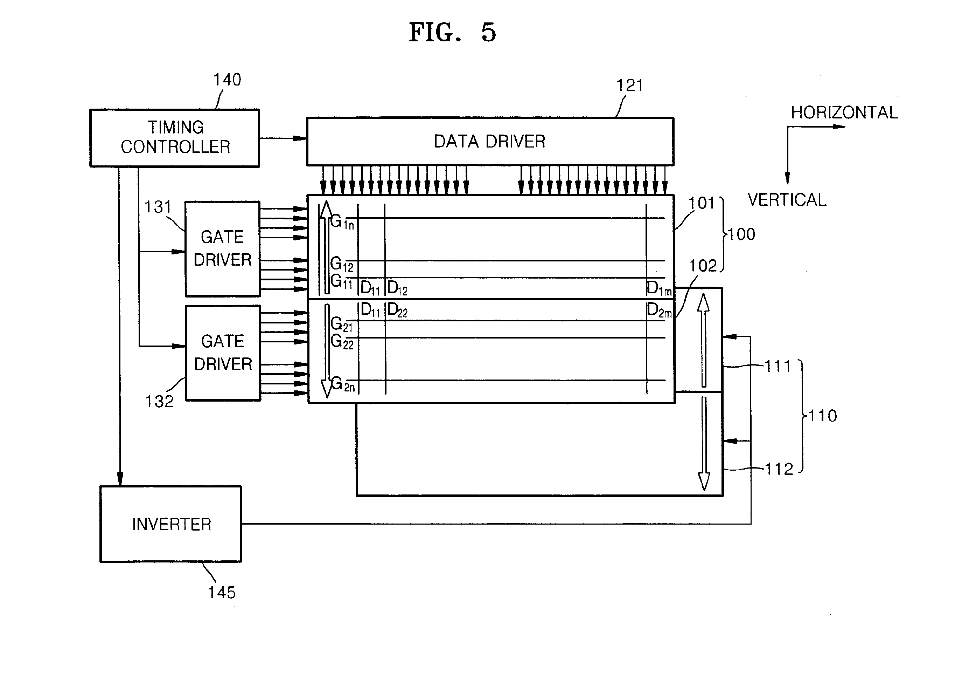

Referring to Figure 5, a liquid crystal display (LCD) according to an embodiment of the present invention includes a liquid crystal panel 100 which is divided into a plurality of panel regions and a backlight unit 110 that is divided into a plurality of backlight regions corresponding to the panel regions and supplies light.

The backlight regions face the corresponding panel regions, and the backlight unit 110 may be a direct type light emitting backlight or an edge type light emitting backlight. The liquid crystal panel 100 further includes a data driver 121 supplying data signals to the liquid crystal panel 100 and gate drivers 131, 132 which correspond to the panel regions and supply scan signals to the panel regions.

In an embodiment of the present invention, the liquid crystal panel 100 may include a first panel region 101 and a second panel region 102. The backlight unit 110 is divided into a first backlight region 111 facing the first panel region 101 and a second backlight region 112 facing the second panel region 102.

The first panel region 101 includes m x n liquid crystals arranged in a matrix, m data lines D₁₁ through D₁ₘ and n gate lines G₁₁ through G₁ₙ cross each other in the first panel region 101, and thin film transistors are formed at the intersections of the data lines D₁₁ through D₁ₘ and the gate lines G₁₁ through G₁ₙ. The second panel region 102 includes m x n liquid crystals arranged in a matrix, m data lines D₂₁ through D₂ₘ and n gate lines G₂₁ through G₂ₙ cross each other in the second panel region 102, and thin film transistors are formed at the intersections of the data lines D₂₁ through D₂ₘ and the gate lines G₂₁ through G₂ₙ.

In the present embodiment, the liquid crystal panel 100 is divided into a plurality of panel regions along the data lines in a vertical direction. Figure 5 shows an example being divided into two panel regions, but the embodiment is not limited thereto. The number of backlight regions of the backlight unit 110 corresponds to the number of the panel regions of the liquid crystal panel 100, and the backlight regions of the backlight unit 110 respectively radiate light onto the panel regions of the liquid crystal panel. The backlight unit 110 is driven in response to a vertical synchronization signal from a timing controller 140. The backlight unit 110 includes a plurality of light sources radiating light beams of different colors, and the liquid crystal panel 100 and the backlight unit 110 are sequentially driven according to each color.

The LCD further includes the data driver 121 supplying data signals to the data lines of the first panel region 101 and the second panel region 102, a first gate driver 131 supplying scan signals to the gate lines of the first panel region 101, and a second gate driver 132 supplying scan signals to the gate lines of the second panel region 102.

The data driver 121 and the first and second gate drivers 131 and 132 are controlled by the timing controller 140. The timing controller 140 controls the first and second gate drivers 131 and 132 using a vertical synchronization signal and controls the data driver 121 using a horizontal synchronization signal. The backlight unit 110 is driven by an inverter 145, and the inverter 145 is controlled by the timing controller 140. In the present embodiment, gate signals are alternately supplied to a plurality of panel regions. In particular, the timing controller 140 alternately drives the first and second gate drivers 131 and 132 to supply gate signals to the gate lines of the first panel region 101 and gate signals to the gate lines of the second panel region 102. More specifically, a gate signal is supplied to a first gate line G₁₁ of the first panel region 101, and then a gate signal is supplied to a first gate line G₂₁ of the second panel region 102. Then, a gate signal is supplied to a second gate line G₁₂ of the first panel region 101 and then a gate signal is supplied to a second gate line G₂₂ of the second panel region 102. Thus, gate signals are alternately supplied to the first panel region 101 and the second panel region 102.

The first and second gate drivers 131 and 132 supply gate signals to the corresponding panel regions 101 and 102 in a shift register mode. In the shift register mode, gate signals are sequentially transmitted according to the order of the gate lines. The data driver 121 supplies data signals to the first and second panel regions 101 and 102.

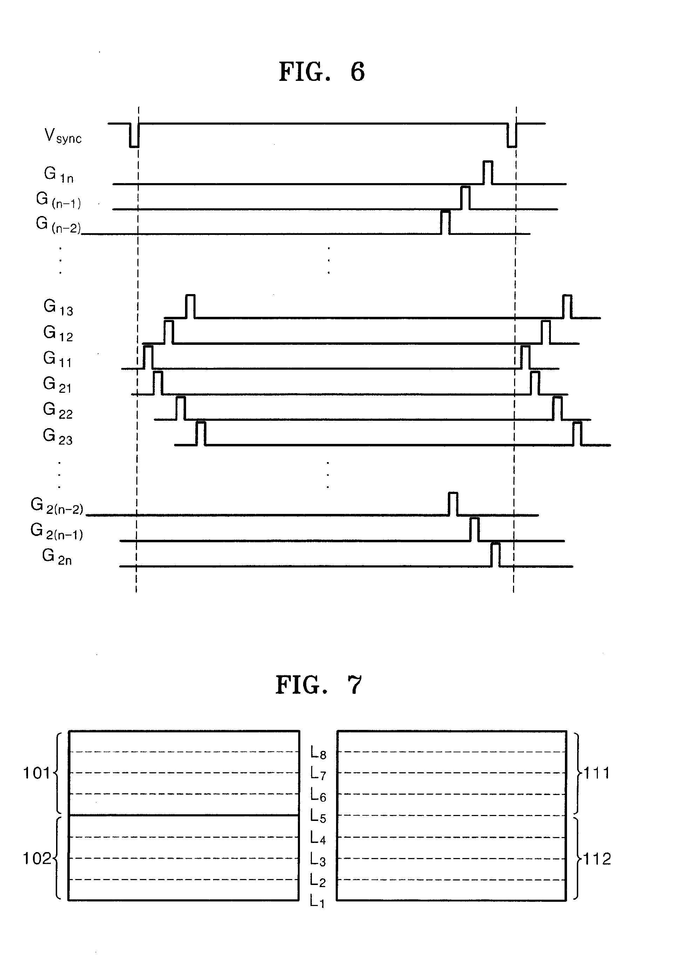

When gate signals are supplied to the first and second panel regions 101 and 102, the gate signals can be alternately supplied symmetrically about the horizontal center of the liquid crystal panel 100. For example but not by way of limitation, as illustrated in Figure 6, gate signals are sequentially supplied to lower gate lines through upper gate lines of the first panel region 101 and gate signals are sequentially supplied to upper gate lines through lower gate lines of the second panel region 102. Also, gate signals may be sequentially supplied to upper gate lines through lower gate lines of the first panel region 101 and from lower gate lines through upper gate lines of the second panel region 102.

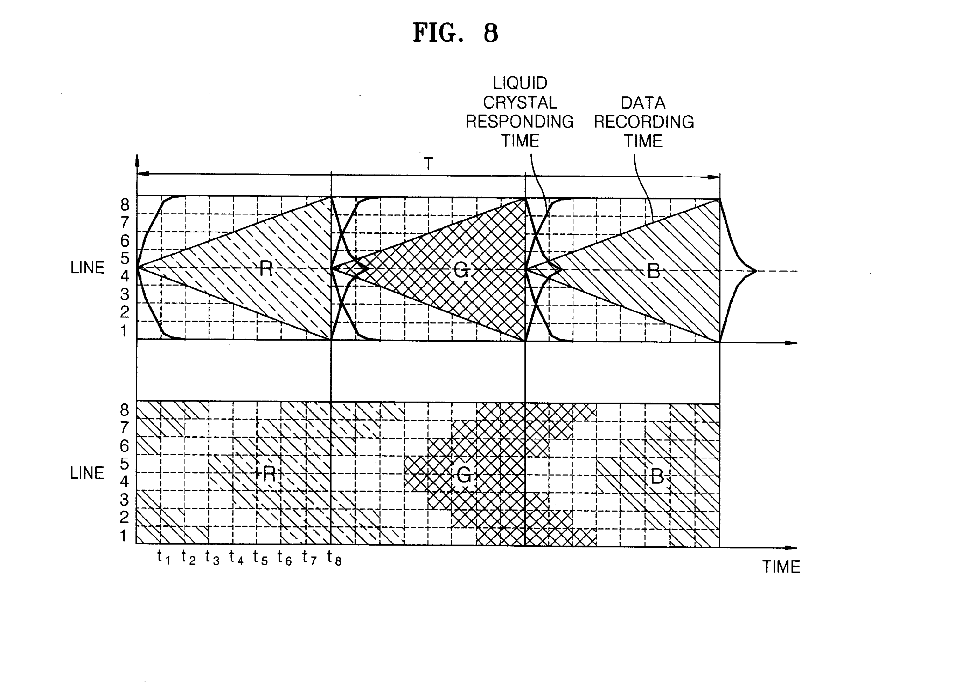

Specifically, in an embodiment of the present invention, as illustrated in Figure 7, the liquid crystal panel 100 is divided into the first and second panel regions 101 and 102 and includes eight gate lines, and the backlight unit 110 includes light source lines corresponding to the gate lines of the liquid crystal panel 100. The transmission time of the data signals and gate signals for each line and the supply time of each color beam is described below.

Referring to Figure 8, data signals and gate signals regarding a red beam (R) are supplied and light is radiated from a light source line of the backlight unit 110 corresponding to the scanned line. Since the first panel region 101 and the second panel region 102 are alternately scanned, light is also alternately radiated from the backlight regions 111 and 112 of the backlight unit 110. Thus, only one color beam is radiated during one time period to substantially prevent color mixing. More specifically, only a blue beam is radiated from t₁-t₃, and only a red beam is radiated from t₃-t₈. In Figure 8, the starting time of the liquid crystal reaction and the light beam radiation time for the first panel region 101 and the second panel region 102 should be marked differently, but since the time difference is small, they are indicated as substantially the same.

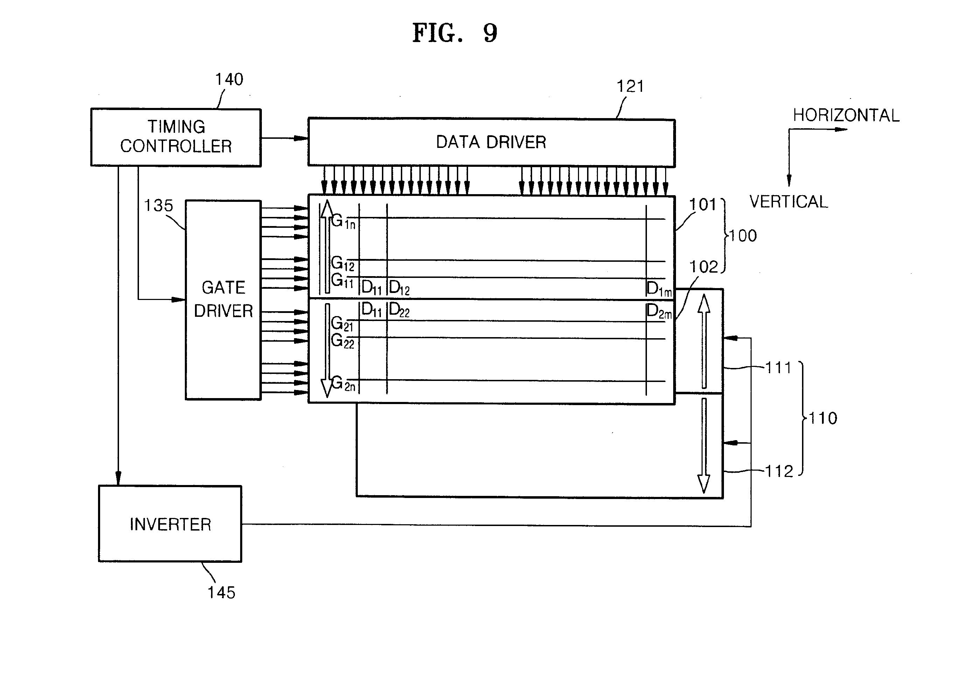

Referring to Figure 9, an LCD according to another embodiment of the present invention includes a gate driver 135 adopting a decoding mode to supply gate signals to a first panel region 101 and a second panel region 102. The rest of the structure of the LCD in Figure 9 is substantially the same as the structure of the LCD of Figure 5, and thus its description will not be repeated.

The gate driver 135 alternately supplies data signals to the first panel region 101 and the second panel region 102 according to the decoding mode, in which signal transmission lines for supplying data signals are selected by the gate driver 135. By alternately supplying data signals to data lines of each panel region, as illustrated in Figure 8, different color beams are not substantially simultaneously radiated to the liquid crystal panel 100, thus substantially preventing color mixing.

A driving method of the LCDs of Figures 5 and 9 is described below.

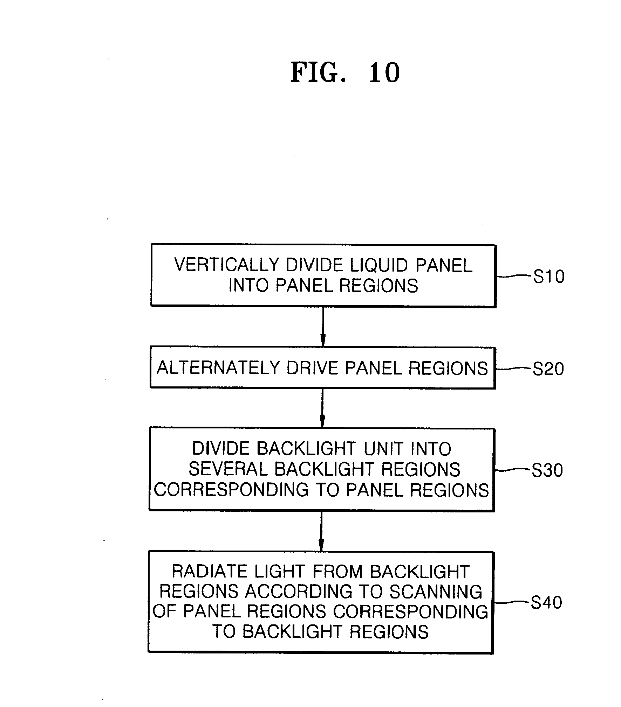

Referring to Figure 10, in the driving method of an LCD according to an embodiment of the present invention, the liquid crystal panel 100 having the data lines D₁₁ through D₁ₘ and D₂₁ through D₂ₘ and the gate lines G₁₁ through G₁ₙ and G₂₁ through G₂ₙ is divided into a plurality of panel regions in a vertical direction, along the data lines D₁₁ through D₁ₘ and D₂₁ through D₂ₘ (S10). The panel regions may respectively have the substantially same area and the substantially same shape. The timing controller 140 controls the data driver 121 using a horizontal synchronization signal and the gate drivers 131 and 132 (or 135) using a vertical synchronization signal, and controls the inverter 145.

At about this time, the backlight unit 110 radiates light to the liquid crystal panel 100, and the timing controller 140 drives the panel regions alternately (S20). The LCD 100 may include more gate drivers than panel regions (not shown) and controls the gate drivers 131 and 132 (or 135) to alternately supply gate signals to the first and second panel region 101 and 102. The gate drivers operate in the shift register mode. Also, the gate drivers 131 and 132 (or 135) operating in the decoding mode may alternately transmit gate signals to the panel regions 101 and 102. The gate signals may be transmitted to the panel regions 101 and 102 symmetrically about the horizontal center of the liquid crystal panel 100.

For example but not by way of limitation, gate signals can be sequentially transmitted to lower gate lines through upper gate lines of the first panel region 101, and gate signals can be sequentially transmitted to upper gate lines through lower gate lines of the second panel region 102. When the gate signals are sequentially transmitted to the upper gate lines through the lower gate lines in the first panel region 101, the gate signals are sequentially transmitted to the lower gate lines through the upper gate lines in the second panel region 102.

The backlight unit is divided into the backlight regions corresponding to the panel regions (S30). The backlight regions radiate light according to the scanning of the panel regions corresponding to the backlight regions (S40).

By transmitting gate signals to the separate panel regions 101 and 102 and radiating light beams from the backlight regions so as not to radiate light beams of different color onto the liquid panel, image quality deterioration due to color mixing can be substantially prevented.

As described above, the LCD according to the embodiments can substantially prevent color mixing in a simple way, and thus may have improved image quality. The liquid crystal panel is divided into a plurality of panel regions which are driven separately. Thus, color mixing can be substantially prevented without substantial additional costs.

Furthermore, in the driving method of the LCD according to the embodiments, gate signals are alternately transmitted to the panel regions to substantially reduce the emission time of the backlight regions of the backlight unit that illuminate different color beams from the data input to the screen, thus minimizing color mixing of the image.

While the present invention has been particularly shown and described with reference to embodiments thereof, it will be understood by those of ordinary skill in the art that various changes in form and details may be made therein without departing from the scope of the present invention as defined by the following claims.

## Claims

1. A liquid crystal display (LCD) comprising:
a liquid crystal panel which is divided into a plurality of panel regions having data lines and gate lines;
a plurality of gate drivers which correspond to the panel regions, arranged to alternately supply gate signals to the corresponding panel regions, wherein each of the gate drivers is arranged to be independently driven;
a data driver for supplying data signals to the data lines; and
a backlight unit for radiating light to the liquid crystal panel.

2. The LCD of claim 1, wherein the panel regions are substantially symmetric about the horizontal centre of the liquid crystal panel.

3. The LCD of claim 1 or 2, wherein the gate drivers adopt a shift register mode.

4. The LCD of claim 1, 2 or 3, wherein the panel regions comprise a first panel region and a second panel region separated from each other in a vertical direction along the data lines of the liquid crystal panel, and the gate drivers comprise a first gate driver and a second gate driver.

5. The LCD of claim 4, wherein the first gate driver is arranged to sequentially supply gate signals to lower gate lines through upper gate lines of the first panel region, and the second gate driver is arranged to sequentially supply gate signals to lower gate lines through upper gate lines of the second panel region.

6. The LCD of claim 4, wherein the first gate driver is arranged to sequentially supply gate signals to upper gate lines through the lower gate lines of the first panel region, and the second gate driver sequentially supplies gate signals to lower gate lines through upper gate lines of the second panel region.

7. The LCD of any one of the preceding claims, further comprising:
an inverter for driving the backlight unit; and
a timing controller arranged to control the data driver using a horizontal synchronization signal, the gate drivers using a vertical synchronization signal, and the inverter.

8. The LCD of claim 7, wherein the backlight unit is arranged to be driven in response to a vertical synchronization signal from the timing controller.

9. The LCD of any one of the preceding claims, wherein the backlight unit comprises a plurality of light sources which radiate light beams of different colours, and the liquid crystal panel and the backlight unit are sequentially driven according to each of the different colours.

10. A liquid crystal display (LCD) comprising:
a liquid crystal panel which is divided into a plurality of panel regions having data lines and gate lines;
a gate driver for alternately supplying gate signals to the panel regions;
a data driver for supplying data signals to the data lines; and
a backlight unit for radiating light to the liquid crystal panel.

11. The LCD of claim 10, wherein the panel regions comprise a first panel region and a second panel region separated in a substantially vertical direction along the data lines of the liquid crystal panel.

12. The LCD of claim 10, wherein the gate driver adopts a decoding mode.

13. The LCD of claim 11, wherein the gate driver alternately supplies gate signals to the first and second panel regions, and sequentially supplies the gate signals to lower gate lines through upper gate lines of the first panel region and to upper gate lines through lower gate lines of the second panel region.

14. The LCD of claim 11, wherein the gate driver alternately supplies gate signals to the first and second panel regions, and sequentially supplies the gates signals to upper gate lines through the lower gate lines of the first panel region and to upper gate lines through lower gate lines of the second panel region.

15. A method of driving a liquid crystal display (LCD) which has a plurality of panel regions having data lines and gate lines; comprising:
alternately driving the panel regions.

16. A method according to claim 15, further comprising
radiating light from light sources of a backlight unit corresponding to the data lines for which scanning is completed.

17. The method of claim 15 or 16, wherein the step of alternately driving the panel regions comprises:
supplying data signals to the data lines with a data driver;
alternately supplying scan signals to the gate lines of the respective panel regions using a gate driver; and
controlling the data driver with a horizontal synchronization signal and controlling the gate drivers with a vertical synchronization signal.

18. The method of claim 17, wherein the panel regions comprise a first panel region and a second panel region separated in a vertical direction along the data lines of the liquid crystal panel, and the gate drivers comprise a first gate driver and a second gate driver, and the supplying of the scan signals to the gate lines comprises:
sequentially supplying gate signals to lower gate lines through upper gate lines of the first panel region with the first gate driver; and sequentially supplying gate signals to upper gate lines through lower gate lines of the second panel region with the second gate driver.

19. The method of claim 17, wherein the panel regions comprise a first panel region and a second panel region separated in a vertical direction along the data lines of the liquid crystal panel and the gate drivers comprise a first gate driver and a second gate driver, and the supplying of the scan signals to the gate lines comprises:
sequentially supplying gate signals to upper gate lines through lower gate lines of the first panel region with the first gate driver; and sequentially supplying gate signals to lower gate lines through upper gate lines of the second panel region with the second gate driver.

20. The method of claim 15 or 16, wherein the step of driving the panel regions comprises:
supplying data signals to the data lines with a data driver;
supplying scan signals to the gate lines of the respective panel regions with respective gate drivers corresponding to the panel regions; and
controlling the data driver with a horizontal synchronization signal and controlling the gate drivers with a vertical synchronization signal.

21. The method of claim 20, wherein the liquid crystal panel is divided into a first panel region and a second panel region along a direction substantially perpendicular to the data lines; further comprising:
alternately supplying gate signals to the first and second panel regions, while sequentially supplying the gates signals to upper gate lines through the lower gate lines of the first panel region and to upper gate lines through lower gate lines of the second panel region.
